# EUROPÄISCHE PATENTSCHRIFT

(11) **EP 3 157 190 B1**
(45) Veröffentlichungstag und Bekanntmachung des Hinweises auf die Patenterteilung: **27.05.2020**
(21) Anmeldenummer: 16188979.5
(22) Anmeldetag: 15.09.2016
(51) Int. Cl.: H04L 9/00, H04L 9/08, H04L 9/32, H04W 12/04, H04L 9/14, H04L 29/06, H04W 12/06, H04W 84/00, H04L 29/08

(54) **VERFAHREN ZUR ZERTIFIZIERUNG DURCH EIN STEUERGERÄT EINES FAHRZEUGS**
METHOD FOR CERTIFICATION BY A CONTROL UNIT OF A VEHICLE
PROCÉDÉ DE CERTIFICATION PAR DISPOSITIF DE CONTRÔLE D'UN VÉHICULE

(30) Priorität: 16.10.2015 DE 102015220226
(43) Veröffentlichungstag der Anmeldung: 19.04.2017
(73) Patentinhaber: Volkswagen Aktiengesellschaft, 38440 Wolfsburg (DE)
(72) Erfinder: Tschache, Alexander, 38436 Wolfsburg (DE); Winkelvos, Timo, 38104 Braunschweig (DE)

(56) Entgegenhaltungen:
- DE-A1-102010 005 422
- US-A1- 2013 212 659
- "Chapter 1: Overview of Cryptography ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 1 - 48 , 1 October 1996 (1996-10-01), XP001525001, ISBN: 978-0-8493-8523-0 Retrieved from the Internet: URL:http://www.cacr.math.uwaterloo.ca/hac/ [retrieved on 2016-12-08]

## Beschreibung

Die Erfindung betrifft ein Verfahren zur Zertifizierung durch ein Steuergerät eines Fahrzeugs, ein Steuergerät sowie ein Fahrzeug.

Eine authentische und geschützte Kommunikation eines Fahrzeugs mit externen Stellen benötigt eine Anbindung an eine PKI (Public Key Infrastruktur) oder den vorherigen Austausch gemeinsamer Geheimnisse. Letzterer Austausch ist in den Anwendungsfällen der Fahrzeuge insbesondere bei vorher unbekannten Kommunikationsgegenstellen nicht anwendbar. Zudem ist vorher nicht immer abschätzbar, wie viele unterschiedliche Schlüssel oder Zertifikate über die Produktlebenszeit benötigt werden, da solche Schlüssel und Zertifikate zeitlichen Beschränkungen unterliegen und ungültig werden können.

Bei allen bekannten Lösungen muss das Fahrzeug ein selbst erstelltes Zertifikat von einer externen Stelle signieren lassen. Dies ist zwar lediglich ein PKI Standardvorgang, setzt aber eine digitale Verbindung zu der externen Signierungsstelle voraus. Man kann jedoch nicht voraussetzen, dass solche eine Verbindung immer zur Verfügung steht. Weiterhin muss sich in diesem Fall das Fahrzeug gegenüber der Signierungsstelle authentisieren, was weitere Probleme mit sich bringt.

DE 103 54 107 A1 beschreibt ein zu einem Fahrzeug externes Trustcenter, welches zur Authentifikation eines von einem Software-Bereitsteller bereitgestellten Softwarepakets dient.

DE 10 2010 005 422 A1 betrifft ein Verfahren zum Aufbauen einer sicheren Verbindung mit einer mobilen Vorrichtung, die dazu konfiguriert ist, einen ersten privaten Schlüssel zu speichern, der mathematisch einem ersten öffentlichen Schlüssel entspricht.

US 2013 / 0 212 659 A1 betrifft die Vereinfachung einer sicheren und vertrauenswürdigen Kommunikationsumgebung von Fahrzeugen.

Der Erfindung liegt nun die Aufgabe zugrunde, die Zertifizierung in einem Fahrzeug zu vereinfachen.

Diese Aufgabe wird gelöst durch ein Verfahren gemäß Anspruch 1, einem Steuergerät gemäß Anspruch 8 beziehungsweise einem Fahrzeug gemäß Anspruch 9.

Das erfindungsgemäße Verfahren zur Zertifizierung durch ein Steuergeräts eines Fahrzeugs umfasst die Schritte:
- Erzeugen eines ersten signierten Zertifikats, welches zumindest einen öffentlichen Schlüssel umfasst und ein fahrzeugindividuelles Merkmal enthält, und eines dazugehörigen privaten Schlüssels;
- Einmaliges Einbringen des ersten signierten Zertifikats und des dazugehörigen privaten Schlüssels in das Steuergerät;
- Signieren eines zweiten Zertifikats, das einen weiteren öffentlichen Schüssel umfasst, in dem Steuergerät mittels des zum ersten signierten Zertifikat dazugehörigen privaten Schlüssels ; und
- Bereitstellen des zweiten signierten Zertifikats zusammen mit dem ersten signierten Zertifikat.

Das erfindungsgemäße Verfahren hat den Vorteil, dass das Fahrzeug beziehungsweise das Steuergerät nun in der Lage ist, Zertifikate selbst zu erzeugen. Deshalb ist es nicht mehr notwendig, diese Zertifikate von einer externen Zertifizierungsstelle signieren zu lassen. Vielmehr ist das Fahrzeug oder ein Steuergerät des Fahrzeugs seine eigene fahrzeuginterne Zertifizierungsstelle oder CA (Certificate Authority). Somit ist keine Kommunikation des Fahrzeugs mit einer externen Zertifizierungsstelle nötig, was eine Onlineanbindung überflüssig macht. Zudem kann das Fahrzeug sich selbst beliebig viele Zertifikate ausstellen und muss nicht mit einem festen Satz von vorsignierten Zertifikaten ausgestattet werden. Das einmalige Einbringen kann zum Beispiel bei der Herstellung des Steuergeräts oder des Fahrzeug vorgenommen werden. Weitere Vorgänge zum Einbringen sind dann nicht mehr erforderlich. Das einmalige Einbringen umfasst auch eine Erzeugung des ersten Zertifikats beziehungsweise der Schlüssel in dem Steuergerät, eine Signierung des ersten Zertifikats in einer externen Zertifizierungsstelle und das anschließende Einbringen des ersten signierten Zertifikats in das Steuergerät. Bei oder nach dem Signieren wird das erste Zertifikat oder der öffentliche Schlüssel zusammen mit dem weiteren öffentlichen Schlüssel bereitgestellt, so dass bei einem Versenden des signierten weiteren öffentlichen Schlüssels an einen Empfänger dieser auch das erste Zertifikat erhält und so den vollständigen Zertifizierungspfad zurückverfolgen kann.

In dem Steuergerät können ein weiterer öffentlicher Schlüssel und ein dazugehöriger weiterer privater Schlüssel erzeugt werden. Das Steuergerät selbst kann somit neue Schlüsselpaare erzeugen und die entsprechenden öffentlichen Schlüssel signieren. Die beiden weiteren Schlüssel können für einen dedizierten Verwendungszweck, zum Beispiel für die Kommunikation mit einem externen Dienstanbieter, verwendet werden.

Es ist vorgesehen, dass das erste signierte Zertifikat ein fahrzeugindividuelles Merkmal enthält. Dies kann zum Beispiel die Fahrzeugidentifikationsnummer VIN oder FIN sein. Dies ermöglicht eine einfachere Verwaltung zum Beispiel in einer Fahrzeugflotte oder eines Fahrzeugverbundes eines Fahrzeugherstellers.

Ein weiterer öffentlicher Schlüssel kann zur Signierung von einem weiteren Steuergerät des Fahrzeugs an das Steuergerät übertragen werden. Das Steuergerät kann aber auch öffentliche Schlüssel, die von außerhalb zum Beispiel von weiteren Steuergeräten eingebracht werden, signieren. Somit kann das Steuergerät für ein weiteres im Fahrzeug befindliches Steuergerät als Zertifizierungsinstanz dienen. Dies hat den Vorteil, dass diese Funktionalität der Signierung nur einmal im Fahrzeug abgebildet werden muss.

Der Übertragungsweg zwischen den beiden Steuergeräten kann durch symmetrische kryptografische Verfahren, wie Signieren, geschützt werden. Diese symmetrische Verschlüsselung wird vorzugsweise vor dem Austausch von dem weiterem öffentlichen Schlüssel und dem signierten weiterem öffentlichen Schlüssel etabliert. Dies hat den Vorteil, dass die Integrität, das heißt die Unverfälschtheit, dieses öffentlichen Schlüssels stets gewährleistet ist.

Es kann vorgesehen sein, dass der signierte weitere öffentliche Schlüssel und ein dazugehöriger weiterer privater Schlüssel für den Aufbau einer gesicherten Kommunikation des Steuergeräts mit einem neuen Kommunikationspartner verwendet werden. Der signierte weitere öffentliche Schlüssel und der dazugehörige weitere private Schlüssel werden explizit für ihren entsprechenden Verwendungszweck erstellt und benutzt, zum Beispiel für die Kommunikation mit einem Onlinedienst eines externen Dienstanbieters.

Das erste signierte Zertifikat und der dazugehörige private Schlüssel können durch eine externe Public-Key-Infrastruktur erzeugt werden. Es ist vorteilhaft, wenn eine Anbindung in eine Rahmen-PKI (Public Key Infrastruktur) gewährleistet ist, so dass externe Kommunikationspartner die Authentizität der Zertifikate des Fahrzeugs verifizieren können. Diese Anbindung muss nicht dauerhaft bestehen. Diese übergeordnete oder Rahmen-PKI kann mehrstufig oder verzweigt sein, was jedoch am vorgestellten Verfahren nichts wesentliches ändert. Die Authentizität des ersten signierten Zertifikats könnte auch auf einem anderem Weg hergestellt werden als durch eine übergeordnete PKI, zum Beispiel durch andere eingebrachte Merkmale. Dies kann realisiert werden zum Beispiel durch ein Einbringen einer eindeutigen Identifikationsnummer, die nicht die Fahrzeugidentifikationsnummer ist, in das Zertifikat. Diese Identifikationsnummer wird dann beim Verbindungsaufbau zu einem Drittanbieter durch ein Herstellerbackend bestätigt. Hiermit kann man zum Beispiel Pseudonymität gegenüber Dritten herstellen, das heißt die Ersetzung eines Identifikationsmerkmals durch ein Pseudonym, um die Identifizierung des Fahrzeugs auszuschließen oder wesentlich zu erschweren. Der Kommunikationspartner könnte diese eingebrachte Merkmale von einem externen Backend des Fahrzeugherstellers zur Laufzeit verifizieren lassen.

Das erste signierte Zertifikat kann einen Namen sowie eine Angabe zum Zeitraum der Gültigkeit des Zertifikats umfassen. Diese erweiterten Informationen erleichtern die Verwaltung innerhalb der PKI. Der Name kann der Name des Hersteller, eine Bezeichnung des Fahrzeugs und/oder eine Bezeichnung des Steuergeräts umfassen.

Das erfindungsgemäße Steuergerät ist eingerichtet zum Einsatz in einem Fahrzeug und ist weiter eingerichtet, ein zuvor beschriebenes Verfahren auszuführen. Es gelten die gleichen Vorteile und Modifikationen wie zuvor beschrieben.

Das erfindungsgemäße Fahrzeug mit mindestens einem Steuergerät umfasst ein Steuergerät wie zuvor beschrieben. Es gelten die gleichen Vorteile und Modifikationen wie zuvor beschrieben.

Es kann weiter vorgesehen sein, dass das Fahrzeug ein weiteres Steuergerät aufweist, wobei die beiden Steuergeräte über einen Kommunikationsweg miteinander verbunden sind, und dass das weitere Steuergerät eingerichtet ist, über den Kommunikationsweg einen öffentlichen Schlüssel zur Signierung an das Steuergerät zu übertragen. Das Steuergerät dient damit einem weiteren im Fahrzeug befindlichen Steuergerät als Zertifizierungsinstanz. Dies hat den Vorteil, dass diese Funktionalität der Signierung nur einmal im Fahrzeug abgebildet werden muss. Das Steuergerät und das weitere Steuergerät können eingerichtet sein, die Verbindung zwischen den beiden Steuergeräten durch symmetrische kryptografische Verfahren zu schützen, zum Beispiel zu signieren. Dies hat den Vorteil, dass die Integrität, das heißt die Unverfälschtheit, der versendeten Daten insbesondere dies öffentlichen Schlüssels stets gewährleistet ist.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

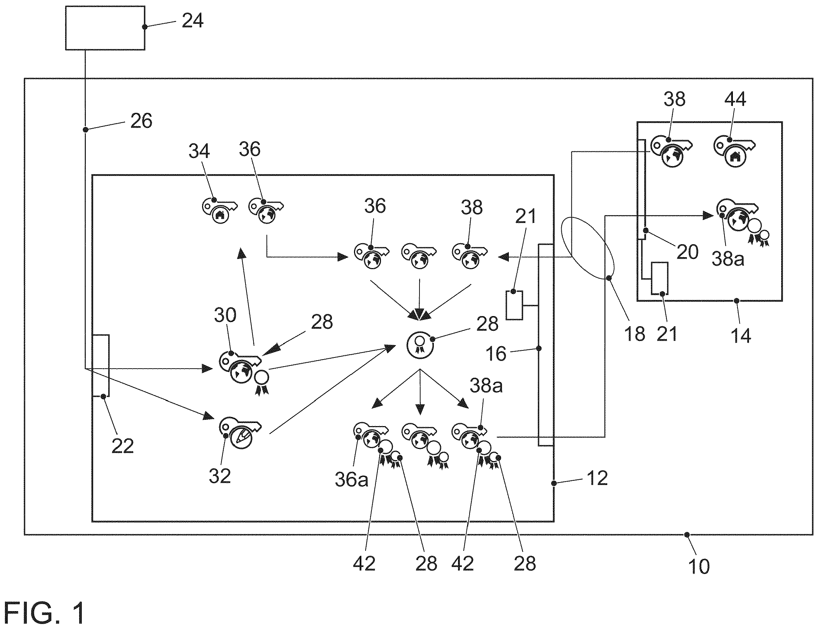

- Figur 1: eine schematische Darstellung eines Fahrzeugs mit einem als Zertifizierungsstelle dienenden Steuergerät.

Figur 1 zeigt ein Fahrzeug 10 wie zum Beispiel ein PKW, LKW, Bus, Motorrad oder auch ein Schienen-, Luft- oder Wasserfahrzeug. Das Fahrzeug 10 enthält ein erstes Steuergerät 12 und ein zweites Steuergerät 14. Die beiden Steuergeräte 12 und 14 dienen zur Steuerung jeweils einer oder mehrerer spezifischer Funktionen wie zum Beispiel einer Motorsteuerung oder eines Navigationssystems. Jedes Steuergerät 12 und 14 enthält eine Recheneinheit zur Ausführung von Programmen oder Rechenfunktionen. Prinzipiell kann das nachfolgend beschriebene Verfahren auch auf anderen Einheiten als Steuergeräten ausgeführt werden, wie zum Beispiel einem Mikroprozessor. Andere Einheiten können jegliche Bauteile eines Fahrzeugs sein, welche Berechnungen wie Schlüsselableitungen, die Erzeugung von Zertifikaten oder das Signieren von Schlüsseln ausführen können. Aus Gründen der Übersichtlichkeit sind in Figur 1 Bauteile, welche lediglich unterstützende Funktionen, wie zum Beispiel eine Spannungsversorgung, nicht dargestellt.

Das erste Steuergerät 12 hat eine Schnittstelle 16 für eine Kommunikationsverbindung 18 zu dem zweiten Steuergerät 14. Das zweite Steuergerät 14 hat eine entsprechende Schnittstelle 20 für die Kommunikationsverbindung 18 zu dem zweiten Steuergerät 14. Die Kommunikationsverbindung 18 kann eine Punkt-zu-Punkt Verbindung zwischen den beiden Steuergeräten 12 und 14 oder ein Bussystem wie zum Beispiel eine CAN-Bus sein. Auch andere Verbindungsmöglichkeiten wie eine Ethernetverbindung oder eine drahtlose Verbindung sind hier umfasst. Die Kommunikationsverbindung 18 ist signiert, vorzugsweise symmetrisch. Dazu wird bei der Herstellung der Steuergeräte 12 und 14 beziehungsweise bei der Herstellung des Fahrzeugs ein Geheimnis 21 in beide Steuergeräte 12 und 14 eingebracht, das dann als Referenz für die Signierung von Daten dient, welche über die Kommunikationsverbindung 18 gesendet werden.

Das erste Steuergerät 12 hat eine weitere Schnittstelle 22 zur Einbringung von Daten, die dazu dienen, dem ersten Steuergerät 12 die Funktionalität einer fahrzeuginternen Zertifizierungsstelle oder CA zu geben. Die weitere Schnittstelle 22 kann auch in der Schnittstelle 16 enthalten sein, so dass das erste Steuergerät 12 lediglich eine Schnittstelle umfasst.

Mittels der Schnittstelle 22 ist das erste Steuergerät 12 zumindest während der Herstellung des Fahrzeugs 12 mit einer Rahmen-PKI 24 (Public-Key-Infrastruktur) verbunden. Diese Verbindung 26 kann kabelgebunden oder kabellos, beispielsweise ein WLAN oder Mobilfunknetz, sein. Auch ist es möglich, dass diese Verbindung nicht direkt, wie dargestellt, sondern indirekt ausgestaltet ist, zum Beispiel über ein weiteres Steuergerät.

In der Rahmen-PKI 24 wird ein erstes signiertes Zertifikat 28, welches zumindest einen öffentlichen Schlüssel 30 umfasst, und ein dazugehöriger privater Schlüssel 32 für eine asymmetrische Verschlüsselung generiert. Das erste signierte Zertifikat 28 enthält optional ein fahrzeugindividuelles Merkmal wie zum Beispiel die Fahrzeugidentifikationsnummer VIN oder FIN. Auch kann das erste signierte Zertifikat 28 einen Namen sowie eine Angabe zum Zeitraum der Gültigkeit des Zertifikats 28 umfassen.

Über die Verbindung 26 werden einmalig, zum Beispiel bei der Herstellung des Fahrzeugs 10, das erste signierte Zertifikat 28, welches zumindest den öffentlichen Schlüssel 30 umfasst, und der dazugehörige private Schlüssel 32 in das erste Steuergerät 12 eingebracht. Das erste signierte Zertifikat 28 berechtigt das erste Steuergerät 12, andere Zertifikate zu signieren.

Alternativ kann das erste Steuergerät 12 ein erstes Zertifikat, welches zumindest einen öffentlichen Schlüssel 30 umfasst, und einen dazugehörigen privaten Schlüssel 32 für eine asymmetrische Verschlüsselung generieren. Anschließend sendet das erste Steuergerät 12 das erste Zertifikat zur Signierung an die Rahmen-PKI 24. Diese schickt dann das erste signierte Zertifikat 28 an das Steuergerät 12 zurück.

Mit dem ersten signierten Zertifikat 28 beziehungsweise dem öffentlichen Schlüssel 30 und dem dazugehörigen privaten Schlüssel 32 kann das Steuergerät 12 ein weiteres oder beliebig viele weitere Zertifikate oder öffentliche Schlüssel 36 und einen dazugehörigen weiteren privaten Schlüssel 34 signieren. Die beiden weiteren Schlüssel 34 und 36 können für einen dedizierten Verwendungszweck, zum Beispiel für die Kommunikation mit einem externen Dienstanbieter, verwendet werden.

Ein weiteres oder beliebig viele weitere Zertifikate oder öffentliche Schlüssel 38 können über die Kommunikationsverbindung 18 von dem zweiten Steuergerät 14 in das erste Steuergerät 12 eingebracht werden.

In einem Zertifizierungsvorgang 40 oder Signierungsvorgang wird der weitere öffentliche Schlüssel 36 in dem ersten Steuergerät 12 mittels des privaten Schlüssels 32, der auch als Signierschlüssel bezeichnet werden kann, signiert oder zertifiziert. Anders ausgedrückt wird eine Signatur über den öffentlichen Schlüssel oder über ein Zertifikat, welches den öffentlichen Schlüssel enthält, erstellt. In der Regel wird die erstellte Signatur an den signierte Schlüssel beziehungsweise an das signierte Zertifikat angehängt oder separat übertragen. Schließlich wird das erste Zertifikat 28 gemeinsam mit dem signierten weiteren öffentlichen Schlüssel 36a bereitgestellt und dann an neue Kommunikationspartner versandt.

Wenn nun mit diesem signierten weiteren öffentlichen Schlüssel 36a nach außen kommuniziert wird, zum Beispiel über die Schnittstelle 16 oder eine weitere Schnittstelle zu einem externen Dienstanbieter, kann dieser die Signierungskette bis zu der Rahmen-PKI 24 verifizieren. Dazu enthält das zweite Zertifikat 42 den weiteren öffentlichen Schlüssel 36 und wurde von dem privaten Schlüssel 32 unterschrieben. Das zugehörige Zertifikat zu dem privaten Schlüssel 32 ist das erste signierte Zertifikat 28 und enthält den öffentlichen Schlüssel 30. Das erste signierte Zertifikat 28 ist unterschrieben von der Rahmen-PKI 24.

Der externe Dienstanbieter erhält also den öffentlichen Schlüssel der Rahmen-PKI 24. Mit diesem verifiziert er das erste signierte Zertifikat 28 und somit den darin enthaltenen öffentlichen Schlüssel 30 des Steuergeräts 12. Mit diesem verifiziert er dann das zweite Zertifikat 42, welches den signierten weiteren öffentlichen Schlüssel 36a enthält.

Der externe Dienstanbieter hat damit dann die Authentizität des signierten weiteren öffentlichen Schlüssels 36a auf die Rahmen-PKI 24 zurückgeführt und vertraut ihm, so dass das Steuergerät 12 den zugehörigen privaten Schlüssel 34 zusammen mit dem signierten weiteren öffentlichen Schlüssel 36a zur authentisierten Kommunikation verwenden kann.

Darüber hinaus kann das erste Steuergerät 12 als Zertifizierungsstelle oder Zertifizierungsinstanz für das zweite Steuergerät 14 dienen. Dazu signiert das erste Steuergerät 12 analog zu der obigen Beschreibung in dem Zertifizierungsvorgang 40 das weitere Zertifikat beziehungsweise den weiteren öffentlichen Schlüssel 38 zu dem signierten weiteren öffentlichen Schlüssel 38a, der dann das zweite Zertifikat 42 und das erste Zertifikat 28 umfasst beziehungsweise mitgeschickt bekommen hat. Der signierte weitere öffentliche Schlüssel 38a wird über die Kommunikationsverbindung 18 zurück an das zweite Steuergerät 14 übertragen.

Das zweite Steuergerät 14 kann nun mit dem signierten weiteren öffentlichen Schlüssel 38a und einem in dem Steuergerät 14 vorhandenen privaten Schlüssel 44, der ebenfalls von dem ersten Steuergerät 12 erzeugt worden sein kann, eine durch asymmetrische kryptografische Verfahren gesicherte Verbindung aufbauen.

Das Fahrzeug beziehungsweise das Steuergerät wird in die Lage versetzt, Zertifikate selbst zu erzeugen. Deshalb ist es nicht mehr zwingend notwendig, diese Zertifikate von einer externen Zertifizierungsstelle signieren zu lassen. Vielmehr ist das Fahrzeug oder ein Steuergerät des Fahrzeugs seine eigene fahrzeuginterne Zertifizierungsstelle oder CA (Certificate Authority).

Das Fahrzeug beziehungsweise das Steuergerät kann darüber hinaus als Zertifizierungsstelle oder CA für andere Fahrzeuge oder Geräte dienen. Möglich wäre zum Beispiel eine Signierung von Zertifikaten externer Geräte, zum Beispiel von Smartphones nach einem Pairing, damit das Smartphone sich später damit gegenüber dem Fahrzeug ausweisen kann. Weiterhin kann vorgesehen sein, mehrere derartige, als CA agierende Steuergeräte in einem Fahrzeug vorzusehen, was Abstriche bei den Vorteilen der hier ansonsten vorgeschlagenen Zentralisierung bedeutet, jedoch Vorteile bei dezentralen Systemen oder Anforderungen bietet.

### Bezugszeichenliste

- 10: Fahrzeug
- 12: Steuergerät
- 14: Steuergerät
- 16: Schnittstelle
- 18: Kommunikationsverbindung
- 20: Schnittstelle
- 21: Geheimnis
- 22: Schnittstelle
- 24: Rahmen-PKI
- 26: Verbindung
- 28: erstes signiertes Zertifikat
- 30: öffentlicher Schlüssel
- 32: privater Schlüssel
- 34: weiterer privater Schlüssel
- 36: weiterer öffentlicher Schlüssel
- 36a: signierter weiterer öffentlicher Schlüssel
- 38: weiterer öffentlicher Schlüssel
- 38a: signierter weiterer öffentlicher Schlüssel
- 40: Zertifizierungsvorgang
- 42: zweites Zertifikat
- 44: privater Schlüssel

## Patentansprüche

1. Verfahren zur Zertifizierung durch ein Steuergerät (12) eines Fahrzeugs (10), mit den Schritten:
- Erzeugen eines ersten signierten Zertifikats (28), welches zumindest einen öffentlichen Schlüssel (30) umfasst und ein fahrzeugindividuelles Merkmal enthält, und eines dazugehörigen privaten Schlüssels (32);
- Einmaliges Einbringen des ersten signierten Zertifikats (28) und des dazugehörigen privaten Schlüssels (32) in das Steuergerät (12);
- Signieren eines zweiten Zertifikats (42), das einen weiteren öffentlichen Schlüssel (36, 38) umfasst, in dem Steuergerät (12) mittels des zum ersten signierten Zertifikat (28) dazugehörigen privaten Schlüssels (32); und
- Bereitstellen des zweiten signierten Zertifikats (42) zusammen mit dem ersten signierten Zertifikat (28).

2. Verfahren nach Anspruch 1, **dadurch gekennzeichnet, dass** der weitere öffentliche Schlüssel (36) und ein dazugehöriger weiterer privater Schlüssel (34) in dem Steuergerät (12) erzeugt werden.

3. Verfahren nach Anspruch 1, **dadurch gekennzeichnet, dass** das zweite Zertifikat (42) zur Signierung von einem weiteren Steuergerät (14) des Fahrzeugs (10) an das Steuergerät (12) übertragen wird.

4. Verfahren nach Anspruch 3, **dadurch gekennzeichnet, dass** der Übertragungsweg (18) zwischen den beiden Steuergeräten (12, 14) durch symmetrische kryptografische Verfahren geschützt wird.

5. Verfahren nach einem der vorhergehenden Ansprüche, **dadurch gekennzeichnet, dass** der signierte weitere öffentliche Schlüssel (36a, 38a) und ein dazugehöriger weiterer privater Schlüssel (34, 44) für den Aufbau einer gesicherten Kommunikation des Steuergeräts (12, 14) mit einem neuen Kommunikationspartner verwendet werden.

6. Verfahren nach einem der vorhergehenden Ansprüche, **dadurch gekennzeichnet, dass** das erste signierte Zertifikat (28) und der dazugehörige private Schlüssel (32) durch eine externe Public-Key-Infrastruktur (24) erzeugt werden.

7. Verfahren nach einem der vorhergehenden Ansprüche, **dadurch gekennzeichnet, dass** das erste signierte Zertifikat (28) einen Namen oder eine Angabe zum Zeitraum der Gültigkeit des Zertifikats (28) umfasst.

8. Steuergerät eingerichtet zum Einsatz in einem Fahrzeug (10), **dadurch gekennzeichnet, dass** das Steuergerät (12) eingerichtet ist, ein Verfahren nach einem der Ansprüche 1 bis 7 auszuführen.

9. Fahrzeug mit mindestens einem Steuergerät (12, 14), **dadurch gekennzeichnet, dass** das Fahrzeug (10) ein Steuergerät (12) nach Anspruch 8 aufweist.

10. Fahrzeug nach Anspruch 9, **dadurch gekennzeichnet, dass** das Fahrzeug (10) ein weiteres Steuergerät (14) aufweist, wobei die beiden Steuergeräte (12, 14) über einen Kommunikationsweg (18) miteinander verbunden sind, und dass das weitere Steuergerät (14) eingerichtet ist, über den Kommunikationsweg (18) einen öffentlichen Schlüssel (38) zur Signierung an das Steuergerät (12) zu übertragen.

11. Fahrzeug nach Anspruch 10, **dadurch gekennzeichnet, dass** das Steuergerät (12) und das weitere Steuergerät (14) eingerichtet sind, die Verbindung (18) zwischen den beiden Steuergeräten (12, 14) durch symmetrische kryptografische Verfahren zu schützen.

## Claims

1. A method for certification by a control unit (12) of a vehicle (10), comprising the steps of:
- generation of a first signed certificate (28), comprising at least one public key (30) and containing a vehicle-specific feature, and a private key (32) associated therewith;
- one-time introduction of the first signed certificate (28) and the associated private key (32) into the control unit (12);
- signing of a second certificate (42), comprising an additional public key (36, 38), in the control unit (12), by means of the private key (32) associated with the first signed certificate (28); and
- provision of the second signed certificate (42) together with the first signed certificate (28).

2. The method according to claim 1, **characterized in that** the additional public key (36) and an associated additional private key (34) are generated in the control unit (12).

3. The method according to claim 1, **characterized in that** the second certificate (42) is transmitted to the control unit (12) for signing by an additional control unit (14) of the vehicle (10).

4. The method according to claim 3, **characterized in that** the transmission path (18) between the two control units (12, 14) is protected by symmetrical cryptographic methods.

5. The method according to any one of the preceding claims, **characterized in that** the signed additional public key (36a, 38a) and an additional private key (34, 44) associated therewith are used for establishing a secure communication of the control unit (12, 14) with a new communication partner.

6. The method according to any one of the preceding claims, **characterized in that** the first signed certificate (28) and the associated private key (32) are generated by an external public key infrastructure (24).

7. The method according to any one of the preceding claims, **characterized in that** the first signed certificate (28) comprises a name or information about the period of validity of the certificate (28).

8. A control unit, configured for use in a vehicle (10), **characterized in that** the control unit (12) is configured to implement a method according to any one of claims 1 to 7.

9. A vehicle with at least one control unit (12, 14), **characterized in that** the vehicle (10) has a control unit (12) according to claim 8.

10. The vehicle according to claim 9, **characterized in that** the vehicle (10) has an additional control unit (14), wherein the two control units (12, 14) are connected to one another via a communication path (18), and **in that** the additional control unit (14) is configured to transmit a public key (38) for signing to the control unit (12) via the communication path (18).

11. The vehicle according to claim 10, **characterized in that** the control unit (12) and the additional control unit (14) are configured to protect the connection (18) between the two control units (12, 14) by means of symmetrical cryptographic methods.

## Revendications

1. Procédé pour la certification par un contrôleur (12) d'un véhicule (10), comprenant les étapes de :
- génération d'un premier certificat signé (28), lequel comprend au moins une clé publique (30) et contient une caractéristique individuelle du véhicule, et d'une clé privée (32) correspondante ;
- introduction unique du premier certificat signé (28) et de la clé privée (32) correspondante dans le contrôleur (12) ;
- signature d'un deuxième certificat (42), lequel comprend une autre clé publique (36, 38), dans le contrôleur (12) au moyen de la clé privée (32) correspondant au premier certificat signé (28) ; et
- fourniture du deuxième certificat signé (42) ensemble avec le premier certificat signé (28).

2. Procédé selon la revendication 1, **caractérisé en ce que** l'autre clé publique (36) et une autre clé privée (34) correspondante sont générées dans le contrôleur (12).

3. Procédé selon la revendication 1, **caractérisé en ce que** le deuxième certificat (42) est transmis pour signature au contrôleur (12) à partir d'un autre contrôleur (14) du véhicule (10).

4. Procédé selon la revendication 3, **caractérisé en ce que** la voie de transmission (18) entre les deux contrôleurs (12, 14) est protégée par des procédés cryptographiques symétriques.

5. Procédé selon l'une quelconque des revendications précédentes, **caractérisé en ce que** l'autre clé publique signée (36a, 38a) et une autre clé privée (34, 44) correspondante sont utilisées pour l'établissement d'une communication sécurisée du contrôleur (12, 14) avec un nouveau partenaire de communication.

6. Procédé selon l'une quelconque des revendications précédentes, **caractérisé en ce que** le premier certificat signé (28) et la clé privée (32) correspondante sont générés au moyen d'une infrastructure à clés publiques externe (24).

7. Procédé selon l'une quelconque des revendications précédentes, **caractérisé en ce que** le premier certificat signé (28) comprend un nom ou une indication concernant la période de validité du certificat (28).

8. Contrôleur configuré pour l'utilisation dans un véhicule (10), **caractérisé en ce que** le contrôleur (12) est configuré pour exécuter un procédé selon l'une quelconque des revendications 1 à 7.

9. Véhicule comprenant au moins un contrôleur (12, 14), **caractérisé en ce que** le véhicule (10) présente un contrôleur (12) selon la revendication 8.

10. Véhicule selon la revendication 9, **caractérisé en ce que** le véhicule (10) présente un autre contrôleur (14), les deux contrôleurs (12, 14) étant connectés entre eux à travers une voie de communication (18), et **en ce que** l'autre contrôleur (14) est configuré pour transmettre au contrôleur (12), à travers la voie de communication (18), une clé publique (38) pour signature.

11. Véhicule selon la revendication 10, **caractérisé en ce que** le contrôleur (12) et l'autre contrôleur (14) sont configurés pour protéger la connexion (18) entre les deux contrôleurs (12, 14) par des procédés cryptographiques symétriques.
